# EUROPÄISCHE PATENTANMELDUNG

(11) **EP 3 199 923 A1**
(43) Veröffentlichungstag der Anmeldung: **02.08.2017**
(21) Anmeldenummer: 16152662.9
(22) Anmeldetag: 26.01.2016
(51) Int. Cl.: G01F 1/66

(54) **ULTRASCHALL-DURCHFLUSSMENGENMESSER**

(71) Anmelder: Engelmann Sensor GmbH, 69168 Wiesloch-Baiertal (DE)
(72) Erfinder: Sturek, Robert, 69242 Mühlhausen (DE); Reiß, Holger, 76764 Rheinzabern (DE); Niedermayer, Manuel, 69242 Mühlhausen (DE)
(74) Vertreter: Durm & Partner

(57) **Zusammenfassung**

Ein Durchflussmengenmesser (1) hat ein metallisches Gehäuse (4), in das ein Kunststoffformteil (8) eingesetzt ist, welches einen Messkanal (3) bildet. Entlang des Messkanals (3) sind zwei Ultraschallwandler im Abstand angeordnet. An der Innenwandung (11) des Kunststoffformteils (8) sitzen drei Umlenkspiegel (12a, 12b, 12c), welche die Ultraschallsignale auf ihrem W-förmigen Weg zwischen den beiden Ultraschallwandlern mehrfach reflektieren. Die Umlenkspiegel (12a, 12b, 12c) sitzen auf flachen Sockeln (32, 33, 40), die an der Innenwandung (11) angeordnet und strömungsgünstig ausgebildet sind. Außerhalb der Umlenkspiegel (12a, 12b, 12c) absorbiert das Kunststoffformteil (8) die Ultraschallstrahlung, sodass störende Reflektionen und ein Einkoppeln in das metallische Gehäuse (4) vermieden werden.

## Beschreibung

Die Erfindung betrifft einen Durchflussmengenmesser zur Bestimmung der Menge eines Fluids, das durch einen Messkanal in einem metallischen Gehäuse strömt. Der Durchflussmengenmesser umfasst zwei Ultraschallwandler, die entlang des Messkanals im Abstand angeordnet sind, wobei der erste Ultraschallwandler ein Ultraschallsignal in den Messkanal sendet und der zweite Ultraschallwandler das ausgesandte Ultraschallsignal empfängt. Drei Umlenkspiegel sind im Messkanal angeordnet und reflektieren das vom ersten Ultraschallwandler ausgesendete Ultraschallsignal auf seinem Weg zu dem zweiten Ultraschallwandler mehrfach, sodass sich ein im Prinzip W-förmiger Weg des Ultraschallsignals ergibt. Das Signal kann auch in umgekehrter Richtung laufen, also vom zweiten zum ersten Ultraschallwandler, wobei beide Wandler senden und empfangen können.

Derartige Durchflussmengenmesser werden beispielsweise in Wärmezählern im Bereich der Fernwärme verwendet. Mithilfe eines solchen Wärmezählers ist es möglich, die Wärmemenge, welche Verbrauchern über Warmwasserleitungen zugeführt wird, zu ermitteln. Hierzu wird das Volumen des warmen Wassers, das durch den Messkanal strömt, gemessen. Temperaturfühler ermitteln zusätzlich die Temperaturdifferenz zwischen zwei Messpunkten im Vorlauf und Rücklauf, nämlich vor und nach Abgabe der im Wasser gespeicherten Wärmemenge. Basierend auf diesen beiden Messungen kann der Wärmezähler dann die verbrauchte Wärmemenge ermitteln.

Bedingt durch die hohen Volumenströme im Bereich der Fernwärme weisen die Messkanäle gattungsgemäßer Durchflussmengenmesser vergleichsweise große Querschnitte auf. So große Rohrquerschnitte sind jedoch nicht für den häuslichen Bereich, beispielsweise also zum Einsatz in Heizungssystemen von Gebäuden geeignet. Verringert man nun einfach den Querschnitt des Messkanals, dringt die Ultraschallstrahlung verstärkt in das Metall des Gehäuses ein und regt dieses zu Schwingungen an. Die Schwingungen breiten sich als Körperschall im gesamten Gehäuse aus, wodurch die Messergebnisse verfälscht werden. Darüber hinaus treten verstärkt ungewollte Reflektionen des Ultraschalls an den Innenwänden des Messkanals auf, was ebenfalls zu Messungenauigkeiten führt.

Angesichts dieser Problematik ist es Aufgabe der vorliegenden Erfindung, einen Durchflussmengenmesser mit Ultraschall-Messstrecke bereitzustellen, der auch kleinere Abmessungen, insbesondere einen kleineren Durchmesser, haben kann und dadurch auch für die Verwendung im Bereich der Haustechnik geeignet ist.

Bei der Lösung dieser Aufgabe wird ausgegangen von einem Durchflussmengenmesser gemäß dem Oberbegriff des Anspruchs 1. Gelöst wird die Aufgabe durch die im Kennzeichen des Anspruchs angegebenen konstruktiven Merkmale.

Bei dem erfindungsgemäßen Durchflussmengenmesser ist der Messkanal als ein im Wesentlichen zylindrisches Kunststoffformteil ausgebildet ist, das in das Gehäuse aus Metall eingesetzt ist. Das Kunststoffformteil weist eine Innenwandung auf, die die Umlenkspiegel aufnimmt. Kunststoff hat im Gegensatz zu Metall die Eigenschaft, Ultraschallstrahlung gut zu absorbieren, sodass störende Reflexionen an den Innenwänden des Messkanals weitgehend vermieden werden. Gleichzeitig verhindert das Kunststoffformteil ein Einkoppeln der Ultraschallstrahlung in das metallische Gehäuse. Dadurch erhöht sich die Genauigkeit der Durchflussmengenmessung.

Im Rahmen der vorliegenden Erfindung wird der Begriff Messkanal als Abschnitt eines Kanals, beispielsweise eines Rohrs, definiert, in dem Messungen mittels Ultraschall zur Bestimmung der durch den Messkanal strömenden Menge eines Fluids vorgenommen werden.

Zweckmäßig erstreckt sich das Kunststoffformteil in seiner Längsrichtung mindestens bis unter die Ultraschallwandler. Vorzugsweise sind die beiden Enden des Kunststoffformteils in Strömungsrichtung mit den Ultraschallwandlern jeweils auf einer Höhe angeordnet.

Das Kunststoffformteil kann beispielsweise mittels Spritzgießen in hohen Stückzahlen kostengünstig hergestellt werden. Bevorzugt weist das Gehäuse ein Messrohr auf, in das das Kunststoffformteil eingesetzt ist.

Im Rahmen der Erfindung wurde erkannt, dass die Anordnung von drei Umlenkspiegeln im Bereich der Innenwandung des Messkanals, woraus sich ein W-förmiger Weg der Ultraschallsignale ergibt, zu einem vergleichsweise geringen Druckabfall im strömenden Fluid führt. Bei Einsatz von drei Umlenkspiegel werden starke Querschnittsverengungen, wie sie bei der Anordnung von nur zwei Umlenkspiegeln im Messkanal und einem daraus resultierenden U-förmigem Signalweg auftreten, verringert. Die beiden den Ultraschallwandlern direkt gegenüberliegenden Umlenkspiegel können bei W-förmigem Signalweg im Vergleich zu einem U-förmigen Weg in Längsrichtung des Messkanals stärker geneigt angeordnet werden, wodurch sich ein erheblich geringerer Strömungswiderstand durch die Umlenkspiegel und deren Aufnahmen bzw. Halterungen ergibt.

In einer bevorzugten Ausführungsform weist das Kunststoffformteil an seiner Innenseite Aufnahmen für die Umlenkspiegel auf. Beispielsweise sind zwei der in den Aufnahmen angeordneten Umlenkspiegel im Messkanal senkrecht unter den Ultraschallwandlern positioniert, sodass die quer zur Strömungsrichtung eingestrahlten Ultraschallsignale direkt auf diese Umlenkspiegel treffen. Der dritte Umlenkspiegel kann im Messkanal schräg gegenüber den beiden anderen Umlenkspiegeln angeordnet sein. Die Umlenkspiegel werden bevorzugt vollständig von in die Innenwandung integrierten Aufnahmen aufgenommen, sodass die spiegelnde Oberfläche bündig mit der Innenwandung abschließt. Verwirbelungen im Messkanal werden so minimiert.

Besonders bevorzugt ist eine Ausführungsform, bei der mindestens eine der Aufnahmen mit Schlitzen verbunden ist, welche die Innenwandung des Kunststoffformteils durchsetzen, sodass der zugehörige Umlenkspiegel durch die Wandung hindurch in die Aufnahme einschiebbar ist.

Beispielsweise bestehen die Umlenkspiegel aus polierten Metallplättchen, die eine rechteckige Form aufweisen. Zweckmäßig sind dann mindestens eine, bevorzugt zwei der Aufnahmen als rechteckförmige Vertiefungen ausgebildet, die über Einschubschächte mit den Schlitzen verbunden sind. Bei der Montage des Durchflussmessers können die Umlenkspiegel durch die Schlitze von der Außenseite des Kunststoffformteils her in die Einschubschächte eingeschoben werden. Es versteht sich, dass die Schlitze und die Einschubschächte korrespondierende Querschnitte, insbesondere gleiche rechteckige Querschnitte, aufweisen, die ein solches Einschieben rechteckiger Spiegel ermöglichen. Das Einschieben kann beispielsweise manuell erfolgen.

Bevorzugt werden die Umlenkspiegel in den Aufnahmen mittels Presssitz kraftschlüssig gehalten. Andere Befestigungsmöglichkeiten, wie beispielsweise Verkleben, sind aber ebenso denkbar. Bevorzugt verschließen die eingebauten Umlenkspiegel die Einschubschächte, sodass das Fluid nicht aus dem Messkanal austreten kann.

Der dritte Umlenkspiegel sitzt bevorzugt in einer speziellen dritten Aufnahme an der Innenwandung parallel zur Strömungsrichtung und damit parallel zur Längsachse des Kunststoffformteils. Er kann ebenfalls mittels Presssitz oder durch Kleben in der Aufnahme befestigt sein. Die Montage des dritten mittleren Umlenkspiegels kann einfach von der Innenseite des Kunststoffformteils aus erfolgen. Bevorzugt sind in Strömungsrichtung vor und hinter dem mittleren Umlenkspiegel Vertiefungen an der Innenwandung des Kunststoffformteils vorgesehen.

Die Vertiefungen weisen zweckmäßig einen planen Grund auf. Die Übergänge zwischen der gekrümmten Wandung des Kunststoffformteils und den Vertiefungen sind verrundet, sodass keinerlei Kanten das strömenden Fluid behindern. Die Vertiefungen entsprechen in ihrer Größe in etwa dem dritten Umlenkspiegel.

Vorteilhafterweise ist das Kunststoffformteil zweiteilig ausgebildet und umfasst eine Unterschale und eine Oberschale. Beide Schalen sind beispielsweise über ein Nut-Feder-Verbindung miteinander verbunden. Bevorzugt weist die Unterschale an ihren in Längsrichtung verlaufenden Rändern jeweils eine Feder in Form eines Stegs auf. Diese greifen in korrespondierende Nuten ein, die jeweils an den in Längsrichtung verlaufenden Rändern der Oberschale angeordnet sind. Zusätzlich können die beiden Schalen an ihren Außenseiten zwei weitere Nuten in Umfangsrichtung aufweisen, in denen O-Ringe eingesetzt sind. Diese halten beide Schalen zusammen und vereinfachen dadurch das Einsetzen des Kunststoffformteils in das Gehäuse. Darüber hinaus dichten sie die Außenwand des Kunststoffformteils gegenüber dem metallischen Gehäuse ab, sodass das Fluid ausschließlich durch den Messkanal strömt und Lecks oder ein Bypass verhindert werden.

Weiter bevorzugt sind zwei der Umlenkspiegel in Aufnahmen der Unterschale angeordnet und der dritte Umlenkspiegel in einer Aufnahme der Oberschale. Bevorzugt sitzt der Umlenkspiegel, der in Längsrichtung mittig zwischen den anderen beiden Umlenkspiegeln angeordnet ist, in der Oberschale. Vorteilhafterweise erstreckt sich das Kunststoffformteil in Längsrichtung über die Ultraschallwandler hinaus. Dadurch kann der ganze Messkanal als vorgefertigte Einheit, die strömungsgünstig optimiert ist, in das Gehäuse eingesetzt werden.

In einer besonders bevorzugten Ausführungsform weist das Kunststoffformteil in Strömungsrichtung vor dem ersten Ultraschallwandler und nach dem zweiten Ultraschallwandler Strömungsrichter zur Reduzierung von Turbulenzen auf. Dadurch werden Verwirbelungen innerhalb der Strömung, insbesondere beim Einlauf in den Messkanal, verringert und somit eine gleichmäßigere Durchströmung des Messkanals ermöglicht. Dies erhöht die Genauigkeit der Volumenmessung.

Bei einer bevorzugten Ausführungsform sind an der Innenwandung des Kunststoffformteils flache Sockel angeordnet. Diese Sockel bilden die Basis für die Aufnahmen, in denen die Umlenkspiegel sitzen. Die Sockel sind möglichst flach ausgebildet, um den Strömungsquerschnitt so wenig wie möglich zu verengen. Zum Beispiel können die Sockel eine stetig ansteigende Flanke mit gekrümmter Oberfläche haben, die in Strömungsrichtung in eine abfallende Flanke mit ebener Oberfläche übergeht. Die ebene Oberfläche dient dann als Basis für die naturgemäß ebenen Umlenkspiegel. Zur Erzielung eines W-förmigen Signalwegs ist es zweckmäßig, zwei solcher Sockel spiegelsymmetrisch am Anfang bzw. am Ende des Messrohrs anzuordnen; die unter einem flachen Winkel schräg gestellten Spiegel weisen dabei gegeneinander. Der dritte Sockel ist vorzugsweise gegenüber in der Mitte angeordnet und hat eine ebene Fläche, die parallel zur Strömungsrichtung verläuft. Diese Fläche nimmt den mittleren Umlenkspiegel auf, der die Ultraschallsignale von oder zu den schräggestellten Spiegeln reflektiert.

Die im Bereich des Anfangs und Endes des Messrohrs angeordneten Sockel können von Strömungsrichtern flankiert werden, welche sich näherungsweise senkrecht von der Innenwandung ins Innere des Messkanals erstrecken. Diese Strömungsrichter lenken und vergleichmäßigen die Strömung durch den Messkanal und vermeiden insbesondere Turbulenzen im Bereich der Umlenkspiegel, welche zu Messungenauigkeiten führen würden.

Vorteilhafterweise sind die Sockel bzw. Aufnahmen für die Umlenkspiegel in Strömungsrichtung von je zwei parallelen Strömungsrichtern flankiert, die sich vertikal ins Innere des Kunststoffformteils erstrecken. Diese Strömungsrichter begrenzen die Sockel in ihrer seitlichen Ausdehnung in einer Querschnittsebene quer zur Strömungsrichtung. Bevorzugt befinden sich die Sockel und damit auch die Strömungsrichter in der Unterschale des Kunststoffformteils. Zusätzlich können auch an der Oberschale des Kunststoffformteils weitere Strömungsrichter angeordnet sein, die sich vertikal in Richtung der Unterschale erstrecken. Beispielsweise sind die Strömungsrichter der Unter- und Oberschale parallel zueinander, insbesondere zueinander fluchtend angeordnet.

Bevorzugt ist das Kunststoffformteil in Längsrichtung zwischen den beiden Ultraschallwandlern im Wesentlichen als Hohlzylinder ausgebildet, der einen Innerdurchmesser im Bereich von 5 mm bis 50 mm, besonders bevorzugt von 8 mm bis 40 mm, insbesondere bevorzugt von 8 mm bis 30 mmm weiter bevorzugt von 8 mm aufweist. Solche relativ kleine Durchmesser entsprechen Durchflussmengen, wie sie beispielsweise in Heizungssystemen von Häusern auftreten, also zwischen 10.000 l/h und 20.000 l/h, insbesondere um 15.000 l/h. Im Rahmen der Erfindung wurde erkannt, dass sich mit sinkendem Querschnitt die Messgenauigkeit des Durchflussmessers erhöht, wobei gleichzeitig der Druckverlust steigt.

Vorteilhaft ist das Kunststoffformteil in dem Gehäuse formschlüssig oder kraftschlüssig befestigt. Die Verbindung zwischen Kunststoffformteil und Metall-Gehäuse kann zum Beispiel über eine Nut-Feder-Verbindung erfolgen. Beispielsweise weist das Kunststoffformteil an seiner Außenseite eine umlaufende Nut auf. Korrespondierend ist an der Innenseite des Gehäuses ein umlaufender Wulst als Feder angeordnet, der in die Nut des Kunststoffformteils eingreift. Alternativ kann die Befestigung des Kunststoffformteils durch eine Presspassung erfolgen, wobei der Innendurchmesser des Gehäuses etwas kleiner gewählt wird als der Außendurchmesser des Kunststoffformteils.

Ein Ausführungsbeispiel der Erfindung wird nachstehend anhand der beigefügten Zeichnungen beschrieben. Es zeigen:
- Figur 1: einen Durchflussmengenmesser mit eingesetztem Kunststoffformteil, teilweise als Vertikalschnitt;
- Figur 2: die Oberschale des Kunststoffformteils von Figur 1, perspektivisch;
- Figur 3: die Unterschale des Kunststoffformteils von Figur 1, perspektivisch.

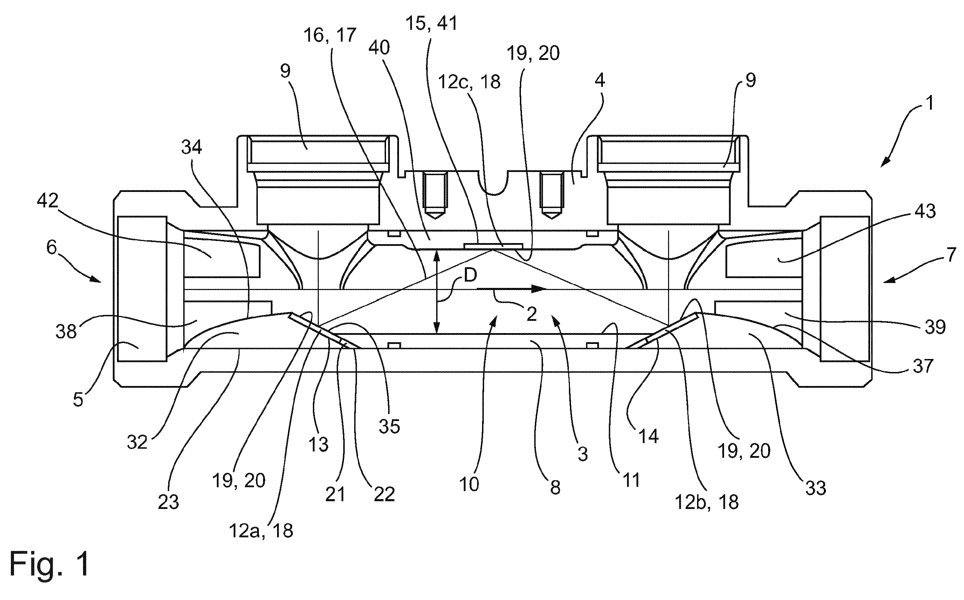

Figur 1 zeigt einen Durchflussmengenmesser 1 zur Bestimmung der Durchflussmenge von warmem Wasser, das entlang einer Strömungsrichtung 2 durch einen Messkanal 3 in einem Gehäuse 4 strömt. Das Gehäuse 4 ist aus Messing hergestellt und weist ein Messrohr 5 mit einem Einlass 6 und einem Auslass 7 auf. Der Messkanal 3 ist als in das Messrohr 5 eingesetztes, im Wesentlichen zylindrisches Kunststoffformteil 8 ausgebildet. Das Kunststoffformteil 8 ist mittels Presssitz kraftschlüssig im Messrohr 5 fixiert. Es ist spiegelsymmetrisch ausgebildet, wobei die Symmetrieebene in Längsrichtung mittig im Kunststoffformteil 8 liegt und sich senkrecht zur Strömungsrichtung 2 erstreckt.

Entlang der Längsachse des Kunststoffformteils 8 sind im Abstand zwei Ultraschallwandler in das Gehäuse 4 eingebaut (nicht dargestellt). Diese sitzen in Halterungen 9 des Gehäuses 4. Zwischen den beiden Ultraschallwandlern bzw. den Halterungen 9 ist das Kunststoffformteil 8 in Längsrichtung im Wesentlichen als Hohlzylinder 10 ausgebildet, der einen Innerdurchmesser D im Bereich von 8 mm bis 40 mm, insbesondere von 8 mm aufweist. Das Kunststoffformteil 8 erstreckt sich in Längsrichtung über die Halterungen 9 für die Ultraschallwandler hinaus. Es weist eine Innenwandung 11 auf, an der drei gleiche Umlenkspiegel 12a, 12b, 12c angeordnet sind. Hierzu sind an der Innenseite Aufnahmen 13, 14, 15 für je einen Umlenkspiegel 12a, 12b bzw. 12c angeordnet.

Die drei Umlenkspiegel 12a, 12b, 12c reflektieren ein vom ersten Ultraschallwandler ausgesendetes Ultraschallsignal auf seinem Weg zu dem zweiten Ultraschallwandler mehrfach, sodass sich ein im Prinzip W-förmiger Signalweg 16 des Ultraschallsignals ergibt. Der Signalweg 16 definiert eine Messstrecke 17, entlang der die Laufzeitverschiebungen der Ultraschallsignale auf ihren Weg vom einen zum anderen Ultraschallwandler in und entgegen der Strömungsrichtung 2 des Fluids gemessen werden. Die Ultraschallwandler arbeiten sowohl als Sender als auch als Empfänger.

Die Umlenkspiegel 12a, 12b, 12c sind als Metallplättchen 18 ausgebildet, die an der Oberfläche 19 poliert sind. Diese polierte Oberfläche 19 bildet die Spiegelfläche 20 zur Reflexion der Ultraschallsignale. Die Umlenkspiegel 12a, 12b, 12c weisen einen rechteckigen Querschnitt auf. Sie sind mittels Presspassung kraftschlüssig in den Aufnahmen 13, 14, 15 gehalten. Zusätzliche Befestigungsmittel wie beispielsweise Klebstoff sind denkbar. Es versteht sich, dass die Konturen der Aufnahmen 13, 14, 15 mit der rechteckigen Form der Umlenkspiegel 12a, 12b, 12c korrespondierend ausgebildet sind.

Die erste Aufnahme 13 und die zweite Aufnahme 14 sind über Einschubschächte 21 mit Schlitzen 22 verbunden, die an der Außenseite 23 des Kunststoffformteils 8 angeordnet sind und die Innenwandung 11 durchsetzen. Sowohl die Schlitze 22 wie auch die Einschubschächte 21 weisen einen rechteckigen Querschnitt auf, der in etwa dem Querschnitt der Umlenkspiegel 12a, 12b entspricht. Zur Montage der ersten beiden Umlenkspiegel 12a, 12b werden diese von außen durch die Schlitze 22 in der Wandung des Kunststoffformteils 8 hindurch in die Aufnahmen 13, 14 eingeschoben und dort kraftschlüssig gehalten.

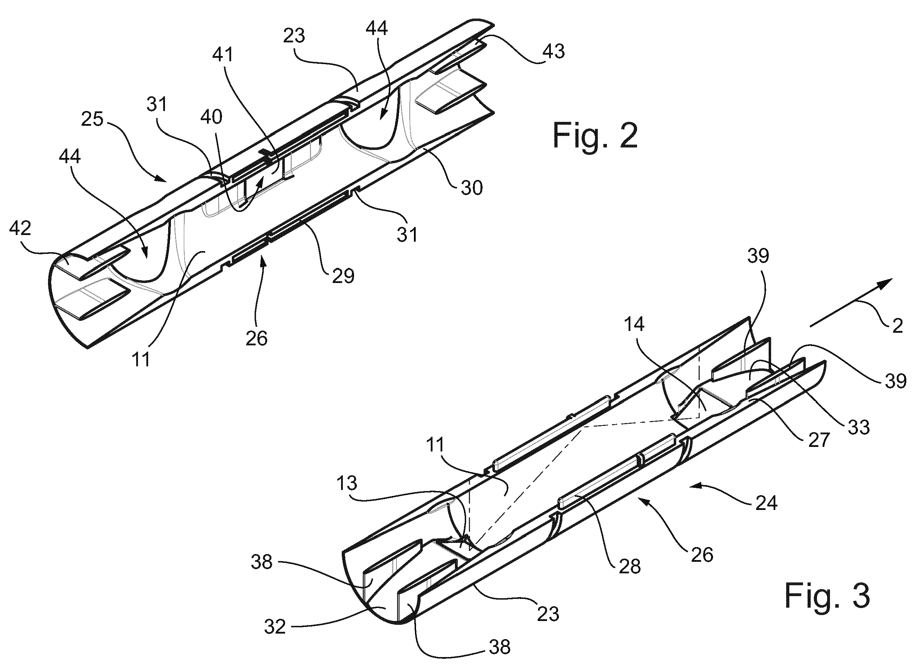

Wie in den Figuren 2 und 3 dargestellt, ist das Kunststoffformteil 8 zweiteilig ausgebildet. Es weist eine Unterschale 24 und eine Oberschale 25 auf. Die richtige Positionierung der beiden Schalen 24, 25 zueinander wird über eine Nut-Feder-Verbindung 26 gewährleistet. An ihren in Längsrichtung verlaufenden Rändern 27 weist die Unterschale 24 jeweils eine Feder in Form eines angesetzten Stegs 28 auf, der in eine entsprechende Längsnut 29 in den Rändern 30 der Oberschale 25 eingreift.

An den Außenseiten 23 der beiden Schalen 24, 25 sind zusätzlich zwei umlaufende Nuten 31 angeordnet, in die jeweils ein O-Ring (nicht dargestellt) eingesetzt ist. Diese O-Ringe fixieren die beiden Schalen 24, 25 relativ zueinander und dichten gleichzeitig das Kunststoffformteil 8 gegen das Messrohr 5 des Gehäuses 4 ab. Somit kann kein Wasser aus dem Kunststoffformteil 8 in das Gehäuse 4 austreten.

Die Unterschale 24 umfasst die beiden Aufnahmen 13, 14 für zwei Umlenkspiegel 12a, 12b. Diese Aufnahmen 13, 14 sind in zwei flache Sockel 32, 33 eingebettet, die an der Innenwandung 11 des Kunststoffformteils 8 ausgebildet sind und sich radial ins Innere des Messrohrs erstrecken.

Der in Strömungsrichtung 2 erste Sockel 32 trägt die Aufnahme 13 für den ersten Umlenkspiegel 12a. Der zweite Sockel 33 trägt die Aufnahme 14 für den zweiten Umlenkspiegel 12b.

In den Figuren 1 und 2 ist zu erkennen, dass die Sockel 32 und 33 im Profil spiegelbildlich ausgebildet sind. Der in Strömungsrichtung erste Sockel 32 hat an seiner Vorderseite eine ansteigende Flanke 34, die eine gekrümmte Fläche bildet. Die abfallende Flanke 35 an der Rückseite bildet eine ebene Fläche, die - in Strömungsrichtung - schräg nach hinten geneigt ist und die Basis für den ersten Umlenkspiegel 12a bildet.

Der zweite Sockel 33 ist spiegelbildlich zum ersten Sockel 32 ausgebildet. Hier bildet die ansteigende Flanke 36 eine ebene Fläche als Basis für den - in Strömungsrichtung - zweiten Umlenkspiegel 12b, während die abfallende Flanke 37 eine leicht gekrümmte Fläche mit - wiederum in Strömungsrichtung - nach hinten zunehmender Steigung bildet.

Beide Sockel 32, 33 werden rechts und links von je einem Strömungsrichter 38, 39 flankiert. Diese Strömungsrichter 38, 39 ragen näherungsweise senkrecht von der Innenwandung des Kunststoffformteils 8 nach innen in das Messrohr 5. Sie dienen der Richtung und Vergleichmäßigung der Strömung und verhindern Turbulenzen im Bereich der Umlenkspiegel 12a, 12b, 12c.

In der Oberschale 25 ist ein dritter Sockel 40 für den mittleren Umlenkspiegel 12c ausgebildet. Dieser dritte Sockel 40 liegt in der Mitte zwischen dem ersten Sockel 32 und dem zweiten Sockel 33. Der Sockel 40 ist sehr flach ausgebildet und hat einen annähernd rechteckigen Querschnitt. Seine im Wesentlichen ebene Oberseite bildet die Basis für den horizontalen Umlenkspiegel 12c, der parallel zur Strömungsrichtung 2 angeordnet ist. In der Mitte des dritten Sockels 40 ist eine plane Vertiefung 41 vorgesehen, welche die Aufnahme 15 für den Umlenkspiegel 12 bildet. Vorderkante und Hinterkante des Sockels 40 sind abgerundet und haben überdies eine halbkreisförmige Kontur, um die Strömung möglichst wenig zu behindern.

Auch die Oberschale 25 weist Strömungsrichter 42, 43 auf, jeweils zwei am - in Strömungsrichtung - vorderen und hinteren Ende. Dabei sind die Strömungsrichter 42, 43 der Oberschale 25 fluchtend mit den Strömungsrichtern 38, 39 der Unterschale 24 angeordnet. Alle Strömungsrichter 38, 39, 42, 43 haben ein strömungsgünstiges ovales Querschnittsprofil.

Die Oberschale 25 hat zwei runde Ausnehmungen 44, die symmetrisch vor bzw. hinter dem Sockel 40 angeordnet sind. Durch diese Ausnehmungen 44 senden die Ultraschallwandler ihre Signale ins Innere des Kunststoffformteils 8 (vgl. Figur 1).

### Bezugszeichen

- 1: Durchflussmengenmesser
- 2: Strömungsrichtung
- 3: Messkanal
- 4: Gehäuse
- 5: Messrohr
- 6: Einlass
- 7: Auslass
- 8: Kunststoffformteil
- 9: Halterung (Ultraschallwandler)
- D: Innendurchmesser
- 10: Hohlzylinder
- 11: Innenwandung (Kunststoffformteil)
- 12a, 12b, 12c: Umlenkspiegel
- 13: erste Aufnahme (Kunststoffformteil)
- 14: zweite Aufnahme (Kunststoffformteil)
- 15: dritte Aufnahme (Kunststoffformteil)
- 16: Signalweg
- 17: Messstrecke
- 18: Metallplättchen (Umlenkspiegel)
- 19: Oberfläche (Umlenkspiegel)
- 20: Spiegelfläche
- 21: Einschubschacht
- 22: Schlitz
- 23: Außenseite (Kunststoffformteil)
- 24: Unterschale (Kunststoffformteil)
- 25: Oberschale (Kunststoffformteil)
- 26: Nut-Feder-Verbindung (Kunststoffformteil)
- 27: Rand (Unterschale)
- 28: Steg (Unterschale)
- 29: Längsnut (Oberschale)
- 30: Rand (Oberschale)
- 31: Umlaufende Nut (Kunststoffformteil)
- 32: erster Sockel
- 33: zweiter Sockel
- 34: ansteigende Flanke (erster Sockel)
- 35: abfallende Flanke (erster Sockel)
- 36: ansteigende Flanke (zweiter Sockel)
- 37: abfallende Flanke (zweiter Sockel)
- 38, 39: Strömungsrichter
- 40: dritter Sockel
- 42, 43: Strömungsrichter
- 44: Ausnehmungen

## Patentansprüche

1. Durchflussmengenmesser zur Bestimmung der Durchflussmenge eines Fluids, das durch einen Messkanal (3) in einem metallischen Gehäuse strömt (4), mit
zwei Ultraschallwandlern, die entlang des Messkanals (3) im Abstand angeordnet sind, wobei der erste Ultraschallwandler ein Ultraschallsignal in den Messkanal (3) sendet und der zweite Ultraschallwandler das ausgesandte Ultraschallsignal empfängt,
drei Umlenkspiegeln (12a, 12b, 12c), die im Messkanal (3) angeordnet sind und das vom ersten Ultraschallwandler ausgesendete Ultraschallsignal auf seinem Weg zu dem zweiten Ultraschallwandler mehrfach reflektieren, sodass sich ein im Prinzip W-förmiger Weg (16) des Ultraschallsignals ergibt,
**dadurch gekennzeichnet, dass**
der Messkanal (3) als ein im Wesentlichen zylindrisches Kunststoffformteil (8) ausgebildet ist, das in das Gehäuse (4) eingesetzt ist,
das Kunststoffformteil (8) eine Innenwandung (11) aufweist, an der die Umlenkspiegel (12a, 12b, 12c) angeordnet sind.

2. Durchflussmengenmesser nach Anspruch 1, **dadurch gekennzeichnet, dass** das Kunststoffformteil (8) an seiner Innenseite (11) Aufnahmen (13, 14, 15) für die Umlenkspiegel (12a, 12b, 12c) aufweist.

3. Durchflussmengenmesser nach Anspruch 2, **dadurch gekennzeichnet, dass** zumindest eine der Aufnahmen (13, 14) mit Schlitzen (22) verbunden sind, welche die Innenwandung (11) des Kunststoffformteils (8) durchsetzen, sodass der zugehörige Umlenkspiegel (12a, 12b) in die Aufnahme (13, 14) einschiebbar ist.

4. Durchflussmengenmesser nach einem der vorhergehenden Ansprüche, **dadurch gekennzeichnet, dass** das Kunststoffformteil (8) zweiteilig ausgebildet ist und eine Unterschale (24) und eine Oberschale (25) umfasst.

5. Durchflussmengenmesser nach Anspruch 4, **dadurch gekennzeichnet, dass** zwei Umlenkspiegel (12a, 12b) in Aufnahmen (13, 14) der Unterschale (24) angeordnet sind und der dritte Umlenkspiegel (12c) in einer Aufnahme (15) der Oberschale (25) sitzt.

6. Durchflussmengenmesser nach einem der vorhergehenden Ansprüche, **dadurch gekennzeichnet, dass** sich das Kunststoffformteil (8) in Längsrichtung über die Ultraschallwandler hinaus erstreckt.

7. Durchflussmengenmesser nach einem der vorhergehenden Ansprüche, **dadurch gekennzeichnet, dass** an der Innenwandung (11) des Kunststoffformteils (8) flache Sockel (32, 33, 40) ausgebildet sind, welche die Basis für die die Umlenkspiegel (12a, 12b, 12c) bilden.

8. Durchflussmengenmesser nach Anspruch 8, **dadurch gekennzeichnet, dass** die Sockel (32, 33) von Strömungsrichtern (38, 39, 42, 43) flankiert sind, die sich vertikal ins Innere des Kunststoffformteils (8) erstrecken.

9. Durchflussmengenmesser nach einem der vorhergehenden Ansprüche, **dadurch gekennzeichnet, dass** das Kunststoffformteil (8) in einem Abschnitt zwischen den Ultraschallwandlern im Wesentlichen als Hohlzylinder (10) ausgebildet ist, der einen Innerdurchmesser (D) im Bereich von 5 mm bis 50 mm, bevorzugt von 8 mm bis 40 mm, besonders bevorzugt von 8 mm bis 30, weiter bevorzugt von 8 mm aufweist.

10. Durchflussmengenmesser nach einem der vorhergehenden Ansprüche, **dadurch gekennzeichnet, dass** das Kunststoffformteil (8) im Gehäuse (4) formschlüssig oder kraftschlüssig befestigt ist.
